(19) Europäisches Patentamt European Patent Office Office européen des brevets

(11) **EP 4 389 463 B1**

(12) **EUROPEAN PATENT SPECIFICATION**

(45) Date of publication and mention
of the grant of the patent:
**20.08.2025 Bulletin 2025/34**

(21) Application number: **22306935.2**

(22) Date of filing: **19.12.2022**

(51) International Patent Classification (IPC):
***B60C 11/24*** *(2006.01)*

(52) Cooperative Patent Classification (CPC):
**B60C 11/246**

(54) **METHOD AND DEVICE FOR DETERMINING TIRE WEARS**

VERFAHREN UND VORRICHTUNG ZUR BESTIMMUNG DES VERSCHLEISSES VON REIFEN

PROCÉDÉ ET DISPOSITIF POUR DÉTERMINER L'USURE D'UN PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**26.06.2024 Bulletin 2024/26**

(73) Proprietor: **TOYOTA JIDOSHA KABUSHIKI
KAISHA
Aichi-Ken 471-8571 (JP)**

(72) Inventors:
• **KAWAKAMI, Yukito
1140 BRUSSELS (BE)**
• **CHIROL, Louis
1140 BRUSSELS (BE)**

(74) Representative: **Cabinet Beau de Loménie
103, rue de Grenelle
75340 Paris Cedex 07 (FR)**

(56) References cited:
**US-A1- 2018 272 813     US-A1- 2020 334 922
US-A1- 2022 017 090**

## Description

BACKGROUND OF THE INVENTION

1. Field of the Invention

The present invention relates to the general field of monitoring systems. More particularly, it relates to a method and a device for determining a wear indicator of a tire of a vehicle based on driving states and usage of this vehicle.

2. Related Art

The state of tires is an important factor in the safety of a vehicle. In particular, worn tires decrease adherence and stability of the vehicle and increase the risk of puncture. Monitoring tire wear of a vehicle and warning the driver of critical state of the tire is thus important to assure the safety and the reliability of the vehicle. There exist direct or indirect approaches for such monitoring.

Direct monitoring approaches are directed to using sensors located in the tire. These methods suffer from problems of sensor durability, particularly due to the large temperature variations and forces experienced by such sensors. They also induce a significant additional cost to the tire or cannot be realised with any type of tire. Furthermore, they cannot be adapted to any vehicle.

Alternative approaches are directed to indirect estimations of tire wear indicators. These approaches are based on imprecise measures, suffer from lack of estimation accuracy, are difficult to adapt to new types of vehicles, are time consuming and/or are manpower consuming.

An example of such an alternative approach is given by US 2022/017090 A1. This patent document concerns a computer-implemented method for modelling and predicting of tire performance and the provision of feedback based thereon. The method includes collecting vehicle data for a vehicle and/or tire data for at least one tire associated with the vehicle, and determining a current tire wear status in real-time for the at least one tire, based at least in part on the collected data. One or more tire performance characteristics are predicted, based at least in part on the determined tire wear status and the collected data. Real-time feedback is selectively provided, based on the predicted one or more tire performance characteristics and/or determined current tire wear status.

As a result, there is a need for a method and a device that estimates tire wear indicators more reliably and for any type of vehicle.

SUMMARY OF THE INVENTION

The purpose of the present invention is to overcome all or some of the limitations of the prior art solutions, particularly those outlined here above, by providing a solution that enables to predict a tire wear indicator based on driving states.

To this end, and according to a first aspect, the invention relates to a computer-implemented method for determining a wear rate of a tire of a vehicle so-called test vehicle based on driving states of said test vehicle during a time period, wherein the driving states (DS) include at least one of the following types of driving states:

- longitudinal acceleration (Gx) of the vehicle;
- lateral acceleration (Gy) of the vehicle;
- yaw rate (YR) of the vehicle

said method comprising steps of:

- determining at least one statistical representation of said driving states over said time period;

characterized in that said method further comprises the following steps:

- determining at least one parametrized function representative of said at least one statistical representation; and

- determining said wear rate with an estimation model using as input at least one parameter of the at least one parametrized function;

said estimation model being determined such as to minimize errors between estimated wear rates and measured wear rates of at least one reference vehicle, said estimated wear rates being determined by said estimation model.

Thus the method according to the invention proposes determining a wear rate (e.g. wear rate) of a tire of a vehicle from statistical representations (e.g. histograms) of driving states (e.g. accelerations, speeds). Hereafter, this method is called "estimation method". This method involves an estimation model which takes as input features representative of these statistical representations and, these features being determined as parameters of a parametrized function.

In embodiments, a wear indicator of a tire is defined as the wear rate of the tire, which is a decrease in radius of the tire per unit of distance travelled by the vehicle (for instance the mileage of the vehicle). Such a wear rate may be measured as a decrease of depth of tire tread during a time period, divided by the distance travelled during this time period. In other embodiments, a wear indicator of a tire is defined as a decrease in radius of the tire per unit of time. Such a wear indicator may be measured as a decrease of depth of tire tread during a time period, divided by the duration of this time period. In other embodiments, the wear indicator may be defined as the decrease of depth of tire tread accumulated during a given time period. In such embodiments, the estimation model may also take as input the distance travelled during this given time period. In such embodiments, the estimation model may estimate the wear rate of the tire during the given time period and combine the estimated wear rate with the travelled distance to estimate the accumulated decrease of tire tread.

However, within the scope of the invention, other variants are also possible, such as a class of the tire wear (e.g. "worn" or "not worn"), a value of wear with respect to a reference value, or a classification with respect to other vehicles or other drivers than the driver of the test vehicle.

In the context of the invention, the term "driving states" refers to values characterizing the movement of the vehicle while driving.

In embodiments, the driving states may include other types of quantities such as speed of the vehicle, input torque, brake percentage and/or steering angle.

The term "longitudinal acceleration" corresponds to an acceleration parallel to the driving axis of the vehicle. The driving axis is the axis aligned with the driving direction. The term "lateral acceleration" corresponds to an acceleration orthogonal to the driving axis and parallel to the ground.

The invention enables to link the severity of the driving to the wear state whereas other methods focus more directly on the tire inputs.

Obtaining driving states generally does not require additional sensors. Particularly, a standard control system of a vehicle comprises sensors enabling to measure or derive driving states accurately, such as a speed sensor or an accelerometer. Signals from these sensors are usually available in a Controller Area Network (CAN) system of the vehicle and can be broadcasted so they are available for on-board or remote calculation of the wear indicator using the estimation model.

Some driving states such as longitudinal accelerations may be derived from driving inputs from the driver, for instance the pressing of the driver on the accelerator pedal or the angle of the steering wheel.

The invention is not restricted to a unique category of vehicle and can be applied to any vehicle using tires, such as passenger cars, commercial trucks or vehicles which may be supported by more or fewer tires.

In the context of the invention, a "statistical representation" refers to a set of values representative of the observed distribution of driving states during a time period.

According to an embodiment, said at least one statistical representation is a histogram.

In embodiments of the method, a histogram is determined for each type of driving states (e.g. longitudinal acceleration, lateral acceleration or yaw rate). Namely, for a given type of driving states, the range of values of these driving states is divided into a finite number of intervals. Each value of the histogram is associated to one of these intervals. This value may be proportional to the duration of time the vehicle has been in driving states with values in this interval, or to the length of the distance travelled in these driving states.

In another embodiment, a statistical representation is a count of peak values of each of the driving states. For instance, the count of peak values of a driving state may be a set of pairs of elements, each pair containing:

• an interval or an index identifying an interval of driving states having values within this interval, and

• the number of times the driving state reached a peak (i.e. local maximum) within this interval.

In other words, a count of peak values of a driving state represents the number of peak values (local maxima) of this driving state as a function of the values (or intervals of values) respectively corresponding to these peak values. In order to extract relevant information for determining tire wear from driving states, the proposed method indicates to determine a parametrized function based on the one or more statistical representations of these driving states.

In the context of the invention, a parametrized function is a function defined by the values of parameters. For instance, an affine function is defined by two parameters: a coefficient for the linear term of the function and the constant term; a quadratic function is defined by three parameters or less; an exponential function may be defined by two parameters.

In order to be representative of a statistical representation, a parametrized function may be determined to minimize differences between values taken by the function and values of the statistical representation. In other words, the parametrized function is determined to fit the statistical representation. For instance, if the parametrized function is a polynomial function, its coefficients are determined such that the values taken by the parametrized function are the closest possible to the values of the statistical representation. Implementation details of methods for such fitting of a parametrized function are well known to the skilled person.

The parameters of the fitted parametrized functions constitute relevant information for determining a tire wear indicator. Using such parameters as input of an estimation model enables to improve its reliability without adding additional data or measures. In other words, the proposed method enables to obtain accurate determination of tire wear indicator while decreasing the required implementation means for obtaining data or measurements.

Nevertheless, the invention is not limited to determining a wear indicator based only on such parameters. In addition to these parameters, and according to embodiments, the estimation model may use other data than said parameters as additional inputs of an estimation model for determining a tire wear indicator.

The estimation model according to the invention is determined from data of reference vehicles. These data comprise measured tire wear indicators of the reference vehicles. The estimation model is determined such as to minimize errors between these measured tire wears and tire wears predicted by the estimation model. Hence, the estimation model is an estimated mapping between input data characterizing a vehicle (i.e. parameters of functions representative of statistical representation of driven states) and the true tire wear of this vehicle (i.e. measured tire wears).

Such an estimation model is typically a machine learning model, in which case the step of determining the estimation model is performed according to a supervised learning approach in which the target outputs are the measured tire wears.

Accordingly, in particular embodiments, the estimation model is a machine learning model.

The term "machine learning model" refers hereafter to a model which is determined based on existing (i.e. reference) data. In particular, a machine learning estimation model is determined to map input features (e.g. the parameters determined from driving states) to target quantities (e.g. the tire wear indicator). The term "learning" refers to the fact that the parameters of the model are determined, based on the existing data, such that the outputs (called "estimation" or "prediction") of this model match with the target quantities.

The use of a machine learning model is advantageous in the context of the invention since it enables to perform accurate estimation or prediction without having a complex analytical model. Indeed, the number of inputs (i.e. the parameters of parametrized functions) may be kept low and still forming relevant information for determining tire wears. Furthermore, lowering the number of inputs for the estimation model enables to train this estimation model with fewer data for training the model and to have a more robust model by avoiding overfitting issues. Consequently, the invention allows decreasing the required implementation means for reliable estimations, such as memory consumption, computation time, and/or time for model determination.

In embodiments, the estimation model is a random forest.

In other embodiments, the estimation model is an artificial neural network.

It should be noticed that the estimation model may be other of another type of regression model or classification model (e.g. linear regression, or gradient boosting model).

According to embodiments, the step of determining at least one statistical representation comprises, for at least one type of driving states, substeps of:

- dividing the driving states belonging to said type into distinct groups of driving states, each group corresponding to a respective phase of driving; and

- determining, for at least one said group, statistical representation of the driving states of this group.

A "phase of driving" is defined by a group of driving states having one or more characteristic in common. For instance, the phase of "braking" corresponds to negative longitudinal accelerations with negative values.

Such distinction between different phases of driving among the driving states enables to extract more relevant characteristics of the driving states and leads to more reliable estimations. Indeed, distinct phases of driving states have different influence on the wear of the tire.

For instance, in an embodiment, for driving states which are longitudinal accelerations, a statistical representation of positive accelerations (increasing vehicle speed), and a statistical representation of negative accelerations (braking) are determined. In this embodiment, the longitudinal accelerations are split into two phases: increasing vehicle speed and braking.

In an embodiment, for driving states which are lateral accelerations, a statistical representation of negative lateral accelerations (turning left) and a statistical representation for positive lateral accelerations (turning right) are determined. In this embodiment, the lateral accelerations are split into two phases: turning left and turning right.

In an embodiment, a statistical representation for longitudinal accelerations which occur at low speed (for instance below 20 km/h) and a statistical representation for longitudinal accelerations which occur at higher speed (for instance above 20 km/h) are determined. In this embodiment, the longitudinal accelerations are split into two phases: low speed and high speed.

It should be noticed that a driving state may be divided into more than two phases. For instance, the longitudinal acceleration may be split into the three following phases: braking (i.e. positive acceleration), increasing speed when the vehicle has low speed (e.g. positive acceleration at speed below 20km/h or below another speed treshold), and increasing speed when the vehicle has high speed (e.g. positive acceleration at speed above 20km/h or above another speed treshold).

According to a particular embodiment, the method comprises steps of:

- comparison between the predicted wear rate of a tire of said test vehicle and at least one wear rate of a tire of at least one other vehicle determined based on driving states of said at least one other vehicle with any embodiment of the method for determining;

- determining a class of wear rate of the tire of the test vehicle based on said comparison.

The embodiment proposes determining a class of tire wear rate (e.g. "slow rate", "average rate", "fast rate") based on a comparison of the predicted tire wear indicator of the test vehicle and one or more predicted tire wear indicators of one or more other vehicles.

For example, the class of wear rate of the test vehicle tire may be relative to a given vehicle (different from the test vehicle) and/or tire of a given vehicle. It may indicate a higher or lower tire wear rate of the test vehicle compared to the given vehicle.

In another example, the class of wear indicator is relative to wear indicators of a plurality of vehicles. Such a class of wear rate may indicate a higher or lower tire wear rate compared to an average predicted wear rate in this plurality of vehicles. Advantageously, the estimation model may be used to determine class of wear indicator for vehicles of different types (for instance different models, different shapes or different weights). For a test vehicle of a particular type, the determined class of wear rate may be relative to vehicles of the same type as the test vehicle.

Advantageously, the class of wear rate may be used as a reliable relative indicator of the tire wear of a test vehicle even if the estimation model is determined based on reference vehicles of different types or with different types of tires than this test vehicle.

According to a particular embodiment, the method for determining comprises a step of determining at least one logarithm of said at least one statistical representation, and said at least one parametrized function is determined based on said at least one logarithm.

The logarithm of a statistical representation refers to the logarithm of each value of the statistical representation.

According to a heuristic, extreme values of driving states such as high accelerations occur rarely but have high influence on the tire wear indicator. Determining parametrized function based on the logarithm of statistical representations instead of the statistical representation itself enables to capture more precisely these extreme values and hence leads to a more reliable estimation of the tire wear indicator.

In other embodiments, functions other than logarithms may be applied to the statistical representation. Furthermore, the parametrized function may be determined based on such other functions applied to the values of the statistical representation.

According to a particular embodiment, said at least one parametrized function is a polynomial function and said parameters of the parametrized function are polynomial coefficients.

In embodiments, the parametrized function is a low degree polynomial function such that the number of its parameters and hence the number of inputs of the estimation model are low. For instance, in an embodiment, the parametrized function is a quadratic function.

As discussed above, using a lower number of inputs for the estimation model advantageously enables to decrease the implementation means required to implement the method for determining, or for training an estimation model.

In other embodiment, the parametrized function may be a function other than a polynomial function (e.g. the function may include negative and/or non-integral power exponents or other expressions such as an exponential).

According to a particular embodiment, the method comprises a step of obtaining at least one of said driving states based on data received from a controller area network of said vehicle.

Advantageously, such data are easy to collect on a vehicle equipped with a standard controller system.

In embodiments, the proposed method comprises a step of determining the importance of each of the input parameters (i.e. the parameters of the parametrized function) in the determining of the wear rate. Implementation details of such step of determining the influence of each input (i.e. the different parameters) of an estimation model on its output (i.e. the tire wear rate) are known to the skilled person.

In combination with the embodiment wherein driving states are grouped according to distinct phases of driving, this embodiment advantageously enables to determine which phase of the driving wears the tire the most.

This embodiment enables to evaluate the factors which are the most decisive for the tire wear. Such factors may be the phases of driving or factors determined based on the input parameters (e.g. maximum acceleration, travelled distance, intensity of the cornering when turning left or right, imbalance between left and right turns).

In embodiments, these factors are communicated to the driver of the vehicle and may be used by the driver to modify the driving of the vehicle such as to reduce the wear rate of the tire and improve the safety of this vehicle.

These factors may also be used to provide the driver with advice on when to change or rotate the tires.

According to a second aspect, the invention relates to a computer-implemented method for training an estimation model for determining a wear rate of a tire of a vehicle based on driving states of said vehicle wherein the driving states (DS) include at least one of the following types of driving states:

- longitudinal acceleration (Gx) of the vehicle;
- lateral acceleration (Gy) of the vehicle;
- yaw rate (YR) of the vehicle,

said method comprising steps of determining statistical representations of driving states of at least one reference vehicle;

characterized in that said method further comprises the following steps:

• determining parameters of parametrized functions representative of said statistical representations;

- updating said estimation model so as to minimize errors between estimated wear rates and measured wear rates of the at least one reference vehicle, said estimated wear rates being determined with said estimation model taking as input parameters of said parametrized functions.

In embodiments of this method, several iterations of the step of updating are performed successively.

According to an embodiment of the method for training, the estimation model is a machine learning model.

According to an embodiment of the method for determining a tire wear, the estimation model is determined according to the method for training described above.

It should be noted that the above method for training can be used to update an estimation model which has already been trained. For instance, an estimation model can be further trained based on additional data comprising driving states of additional reference vehicles. Further training of an estimation model may improve its accuracy.

Besides, what an estimation model has learned when training based on reference vehicles of a first type may be transferable to estimate tire wear of vehicles of a second type. Such a procedure of training a model to perform a task (e.g. classifying vehicles of a second type) when this model has already been trained to perform another task (classifying vehicles of a second type) is called transfer learning. Accordingly, an estimation model trained based on reference vehicles of a first type can be further trained based on reference vehicles of a second type. Advantageously, such a model would be trained faster on the reference vehicles of the second type and would provide more accurate estimations than if were to be trained solely on the basis of the reference vehicles of the second type.

The invention proposes a data processing device comprising means for carrying out the steps of the method according to one of the above-described embodiments.

Namely the invention proposes a data processing device for determining a wear rate of a tire of a vehicle so-called test vehicle based on driving states of said test vehicle during a time period, wherein the driving states (DS) include at least one of the following types of driving states:

- longitudinal acceleration (Gx) of the vehicle;
- lateral acceleration (Gy) of the vehicle;
- yaw rate (YR) of the vehicle,

said device comprising a module for determining at least one statistical representation of said driving states over said time period;

characterized in that the data processing device further comprises:

- a module for determining at least one parametrized function representative of said at least one statistical representation; and

- a module for determining said wear rate with an estimation model taking as input at least one parameter of the at least one parametrized function;

said estimation model being determined such as to minimize errors between estimated tire wear rates and measured tire wear rates of at least one reference vehicle, said estimated wear rates being determined by said estimation model.

The invention also provides a vehicle equipped with a data processing device described above.

The invention also proposes a data processing device receiving data comprising driving states of a vehicle remotely (for instance data broadcasted through a DCM (Data Communication Module) system, or through a telemetry system).

The invention also proposes a data processing device for training an estimation model for determining a wear rate of a tire on a vehicle at a given time based on driving states of said vehicle, said device comprising:

- a module for determining statistical representations of driving states of at least one reference vehicle;

- a module for determining parameters of parametrized functions representative of said statistical representations;

- a module for updating said estimation model so as to minimize errors between estimated wear rates and measured wear rates of the at least one reference vehicle, said estimated wear rates being determined by said estimation model taking as input parameters of said parametrized functions.

The data processing device for training may remotely receive data comprising the driving states and the measured wear rates.

The invention provides a computer program comprising instructions for performing the steps of the method according to any of the above-described embodiments when said program is executed by a computer.

It should be noted that the computer programs referred to in this paper may use any programming language, and be in the form of source code, object code, or code intermediate between source code and object code, such as in a partially compiled form, or in any other desirable form.

The invention provides storage medium, readable by computer and having recorded thereon a computer program comprising instructions for executing the steps of the method according to one of the embodiments described above.

The storage media referred to in this statement may be any entity or device capable of storing the program and being played by any computer equipment, including a computer. For example, the medium may include a storage medium, or a magnetic storage medium, such as a hard drive. Alternatively, the storage media may correspond to a computer integrated circuit in which the program is incorporated, and adapted to execute a method as described above or to be used in the execution of such method.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

    FIG. 1 represents in a flowchart a first embodiment of a method for determining according to the invention;

    FIG. 2 represents a vehicle equipped with a data processing device comprising means for carrying out a method for determining according to an embodiment of the invention;

    FIG. 3 represents a second embodiment of a method for determining according to the invention;

    FIG. 4 represents in a flowchart an embodiment of a method for training according to the invention;

    FIG. 5 represents the functional architecture of a data processing device comprising means for carrying out a method for training according to an embodiment of the invention;

    FIG. 6A and FIG. 6B respectively represent values of driving states on a time period and a corresponding statistical representation;

    FIG. 7 shows logarithms of statistical representations and their representative parametrized functions determined in accordance with the invention; and

    FIG. 8 represents the hardware architecture of a data processing device for determining a wear indicator of a tire according to an embodiment.

    FIG. 9 represents the hardware architecture of a data processing device for training an estimation model according to an embodiment.

DETAILED DESCRIPTION OF EMBODIMENTS

Several embodiments of the invention will now be described. Generally speaking and as previously mentioned, the invention provides a computer-implemented method for determining a wear indicator of a tire of a vehicle.

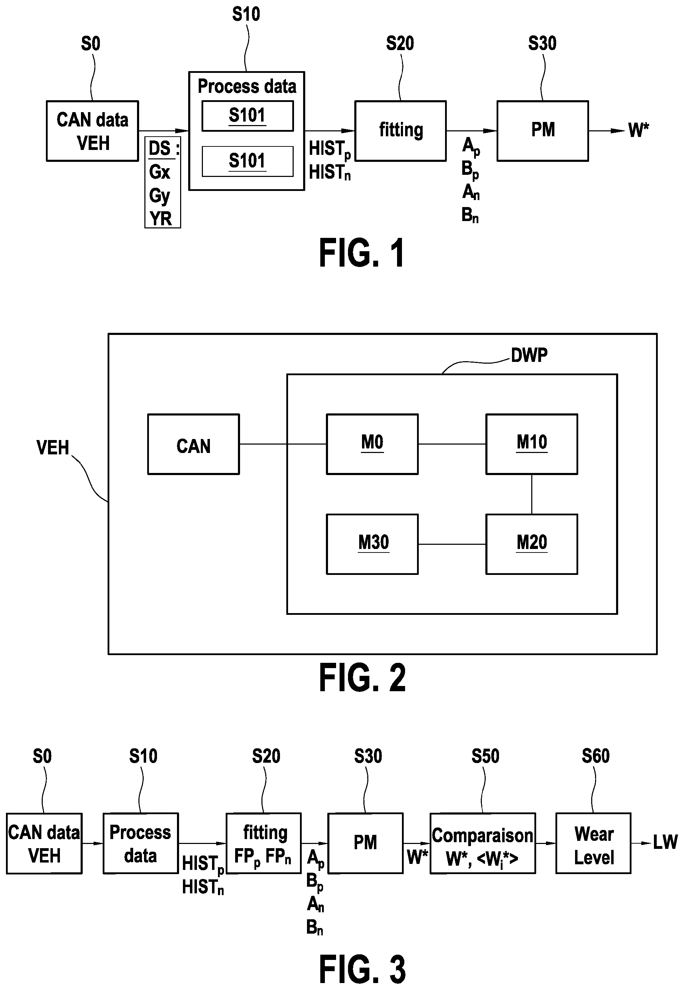

FIG. 1 represents the main steps of a first embodiment of the estimation method for determining a wear indicator of a tire of a test vehicle VEH.

FIG. 1 represents a step S0 of obtaining driving states DS from the controller area network bus CAN of the vehicle VEH. Various types of data may be transferred through the bus CAN. These data may be generated by sensors (e.g. accelerometer, speed sensor) or from control inputs (e.g. an acceleration input or a steering wheel rotation controlled by the driver). It should be notice that the invention is not restricted to CAN data. In embodiments, driving states are obtained from sensors or the electronic control unit of the vehicle directly.

In step S0, data are received from the network CAN during a given time period. The CAN data are converted and stored to form a plurality of driving states DS of the vehicle on the given time period. In the present embodiment three types of driving states are obtained and used in the estimation method: longitudinal accelerations Gx, transversal acceleration Gy and yaw rates YR.

The driving states may be acquired with a given frequency (e.g. 1Hz). For instance, one value of longitudinal or lateral acceleration may be acquired every second. The acquisition of driving states may be performed at a higher or lower frequency.

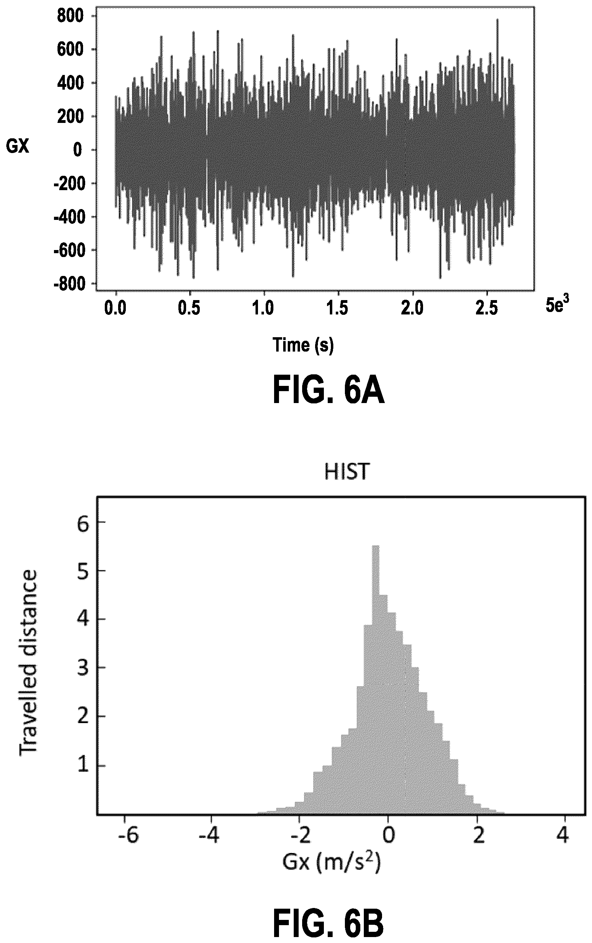

FIG. 6A represents an example of values of driving states DS obtained during the driving of a vehicle as a function of time. In particular, the FIG. 6A shows a sequence of longitudinal acceleration values Gx of the vehicle during a fraction (less than four hours) of the time period during which the longitudinal acceleration has been recorded.

During a step S10, a statistical representation of each type of driven states Gx, Gy and YR is determined by processing data obtained in step S0. In the embodiments described hereafter, the statistical representations are histograms. This feature is not limitative to the invention, as other statistical representations of driving states on a time period may be used in other embodiments, such as point clouds or cumulative histograms.

FIG. 6B shows a statistical representation in the form of a histogram HIST of the longitudinal accelerations Gx represented in FIG. 6A. The represented values of Gx (between -6 and 4 meters per second squared in this example) are decomposed into a finite number of intervals. Each interval is associated to a value of travelled distance. In particular, a value of the histogram corresponds to an accumulation of travelled distance (e.g. mileage) when the vehicle had a longitudinal acceleration in a given interval. Such histogram may be determined by combining values of longitudinal acceleration (or any other type of driving states such as lateral acceleration or yaw rate) and speed of the vehicle VEH during the same time period. Such histogram may also be determined by combining values of driving states and obtained travelled distance (for instance measured with an odometer) during the same time period. For instance, FIG. 6B shows that during the time period during which the vehicle VEH has been recorded, it has travelled 4 km with acceleration between 0 and 0.1 meter per second squared.

In the example of FIG. 6B, the values of the histogram HIST correspond to travelled distances. In other embodiments, each value of the histogram is a duration value corresponding to the time spent by the vehicle with a value of driving states (in this case a longitudinal acceleration Gx) belonging to a given interval.

The histogram HIST is split in two histograms: a histogram $HIST_n$ for negative values of the longitudinal acceleration Gx (corresponding to speed increasing) and a histogram $HIST_p$ for positive values of the longitudinal acceleration Gx (corresponding to braking). Histograms of the other types of driving states (i.e. the transversal acceleration Gy and the yaw rate YR) may be determined similarly with a separation between negative and positive values.

In a step S20, parametrized functions are determined to be representative of the histograms determined in step S10. In this embodiment, the parametrized functions are determined based on the logarithms of these histograms. In particular, the parametrized functions are determined so as to minimise differences between the values taken by these functions and the logarithms of the values of the histograms. For instance, such process of fitting a parametrised function with data points may be performed with least square analysis.

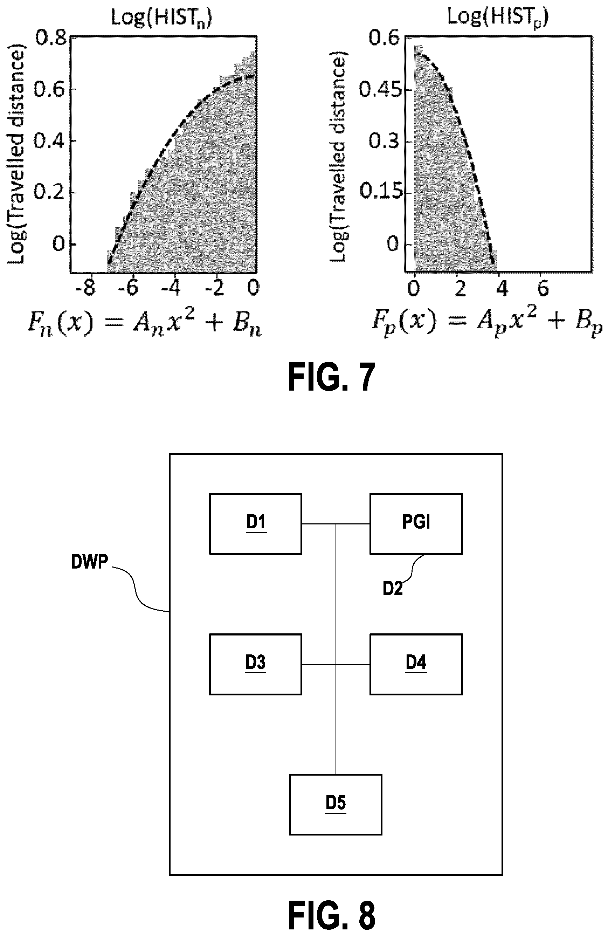

FIG. 7 shows as an illustrative example, a logarithm $\log(HIST_n)$ of the histogram $HIST_n$ of negative values of longitudinal acceleration Gx represented in FIG. 6B, and a logarithm $\log(HIST_p)$ of the histogram $HIST_p$ of positive values of longitudinal acceleration Gx.

FIG. 7 also shows a curve corresponding to a parametrized function $F_n$ determined based on the logarithm $\log(HIST_n)$ of the histogram of negative acceleration values and a curve corresponding to a parametrized function $F_p$ determined based on the logarithm $\log(HIST_p)$ of the histogram of positive acceleration values. In this example, the parametrized functions $F_p$ and $F_n$ are parabolic functions each expressed with two parameters $A_p$, $B_p$, $A_n$ and $B_n$, such that:

$$F_p(x) = A_p x^2 + B_p$$

$$F_n(x) = A_n x^2 + B_n$$

Where x is a value of driving state (e.g. longitudinal acceleration). The parameters of the function Fp (Fn) may be determined such as to minimize an average of differences between the values of Fp (Fn) evaluated at given values of driving state and the values of the logarithm log(HISTp) (log(HISTn)) at the same given values. Such determination of parameters may be done using a least square regression analysis method or any other type of regression methods.

In a step S30, the parameters of the parametrised functions determined in step S20 are used as input of an estimation model PM. The input of the estimation model PM may be a vector comprising the values of these parameters. Based on this input, the estimation model PM outputs an estimated tire wear indicator W* of the vehicle VEH for the monitored time period and travelled distance corresponding to the input driving states.

In this embodiment, the estimation model is a machine learning model trained according to a method described later. A non-exhaustive list of examples of such a machine learning model is:

- a random forest;

- a linear estimation model;

- a support vector machine model; or

- an artificial neural network.

FIG. 2 represents the functional architecture of a data processing device DWP configured to implement the first embodiment of the estimation method described above. In particular:

- a module M0 performs the step S0 of obtaining driving states DS from the CAN bus of the vehicle VEH;

- a module M10 performs the step S10 by processing these data to determine statistical representations $HIST_p$ and $HIST_n$ of driving states DS.

- a module M20 performs the step S20 by determining parametrised functions $FP_p$ and $FP_n$ representative of these statistical representations $HIST_p$ and $HIST_n$; and

- a module M30 performs the step S30 by determining a tire wear indicator W* with the estimation model PM, based on the parameters $A_p$, $B_p$, $A_n$ and $B_n$ of the parametrised functions $FP_p$ and $FP_n$.

FIG. 3 represents the main steps of a second embodiment of the estimation method. This second embodiment differs from the first embodiment represented in FIG. 1 in that it has two additional steps S50 and S60 which enable to classify the tire wear indicator of the vehicle VEH with respect to other vehicles, this classification corresponding to determining a tire wear class.

During step S50, the tire wear indicator W* obtained in step S30 is compared with tire wear indicators of other vehicles. In particular in this embodiment, the tire wear indicator W* is compared with an average $<W_i^*>$ of tire wear indicators $W_i^*$ estimated with the estimation model PM from driving states of a group of other vehicles. In this embodiment, the comparison consists in computing the difference $W^*-<W_i^*>$ between the tire wear indicator W* and the average $<W_i^*>$.

The driving states of the vehicle VEH are acquired during a time period. In this embodiment, this time period should be long enough to identify patterns that are present in the driving states of the other vehicles. Hence, this time period might be longer than the time periods used for other embodiments.

In step S60, the class LW of tire wear of the vehicle is determined based on the result of the comparison performed in step S50. In an embodiment, the class LW of tire wear rate corresponds to three possible class:

- if the difference $W^*-<Wi^*>$ is below the negative of a given threshold, the class LW of wear rate LW is determined to be "low";

- if the difference is above the threshold, the class of wear rate is determined to be "high"; and

- if the difference is below, in absolute value, to the threshold, the class of wear is "average".

For instance, the threshold may be equal to the standard deviation on the estimated tire wear indicators of the other vehicles.

In other embodiments, a class of tire wear rate may be a percentile among the estimated wear rates $W_i^*$ of the vehicles $VEH_i$ or may correspond to any other refined classification.

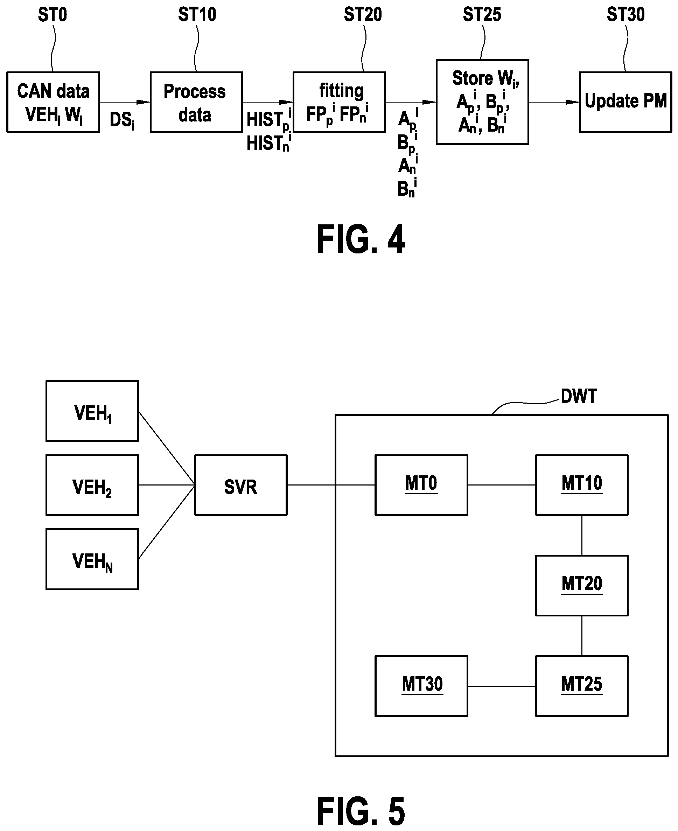

FIG. 4 represents an embodiment of a method for training an estimation model PM. An estimation model determined with this method can be used in the estimation method in accordance with the invention. For instance, the estimation model, once trained, can be used in the first and second embodiments of the estimation method described above.

During a step ST0, CAN data comprising driving states $DS_i$, and measured tire wear indicators $W_i$ of a plurality of reference vehicles $VEH_i$ are obtained. In this embodiment, the driving states $DS_i$ are converted from data of the controller area networks of each vehicle.

The measured tire wear indicators may be measured by sensors or be measured by skilled persons. For each reference vehicle $VEH_i$, driving states $DS_i$ are recorded during one or more time periods, and a tire wear indicator of the vehicle is measured at the end of each time period. Hence, for each reference vehicle $VEH_i$, the tire wear indicator is measured after at least one time period, and for each measured tire wear indicator $W_i$, at least one corresponding sequence of driving states $DS_i$ is recorded.

During a step ST10, each obtained sequence of driving states is processed to determine a statistical representation of these driving states. In this embodiment, the statistical representations are histograms.

In this embodiment, each statistical representation is split into a statistical representation $HIST_p^i$ of positive values of driving states and a statistical representation $HIST_n^i$ of negative values of driving states, similarly as step S10 of the estimation method described above.

In a step ST20, each statistical representation $HIST_p^i$, $HIST_n^i$ is used to determine a parametrised function $FP_p^i$, $FP_n^i$ similarly as in step S20 of the estimation method described above. In particular, the parameters $A_p^i$, $B_p^i$, $A_n^i$, $B_n^i$ of each parametrized function are determined.

In a step ST25, each measured tire wear indicator $W_i$ of a reference vehicle $VEH_i$ is stored in pair with the set of parameters $A_p^i$, $B_p^i$, $A_n^i$, $B_n^i$ determined from the one or more driving states corresponding to this measured wear indicator.

In a step ST30, the stored measured wear indicators $W_i$ and parameters $A_p^i$, $B_p^i$, $A_n^i$, $B_n^i$ are used to update an estimation model PM. The details for implementing such a step of updating an estimation model are known to the skilled person. For instance, if the estimation model is an artificial neural network, it may be updated in several iteration of a gradient descent algorithm.

The update of the estimation model PM aims to minimize an error between outputs (estimated tire wear indicators) of the estimation model and measured tire wear indicators.

FIG. 5 represents a data processing device DWT for implementing the embodiment of the training method described above. The device DWT is equipped to receive data from a server SVR which stores driving states $DS_i$ of reference vehicles $VEH_i$.

The device DWT comprises:

- a module MT0 for obtaining the driving states from the server SVR;

- a module MT10 for performing the step ST10 of determining the statistical representations of driving states as described above;

- a module MT20 for performing the step ST20 of determining the parametrised functions as described above;

- a module MT25 for performing the step ST25 of storing sets of parameters and corresponding measured tire wear indicators as described above; and

- a module MT30 for performing the step ST30 of updating the estimation model PM as described above.

In another embodiment (not described in the figures), a data processing device for training an estimation model may be equipped in a vehicle and could receive data comprising driving states of this vehicle in real-time.

FIG. 8 depicts the hardware architecture of a data processing device DWP for determining a tire wear indicator of a vehicle.

In the embodiment described herein, the device DWP has a hardware architecture of a computer. In particular, it comprises a processor D1, a read-only memory D2, a random access memory D3, a rewritable non-volatile memory D4 and communication means D5.

The read-only memory D2 of the device DWP constitutes a storage medium in accordance with the invention, readable by the processor D1 and on which is stored a computer program PGI in accordance with the invention, this program comprising instructions for executing the steps of an estimation method in accordance with the invention described previously with reference to FIG. 1 or FIG. 3 in embodiments.

The computer program PGI defines functional modules of the device DWP shown in FIG. 2.

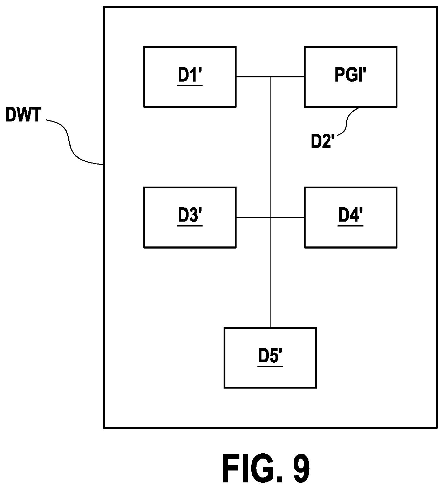

FIG. 9 depicts the hardware architecture of a data processing device DWT for training an estimation model.

In the embodiment described herein, the device DWT has a hardware architecture of a computer. In particular, it comprises a processor D1', a read-only memory D2', a random access memory D3', a rewritable non-volatile memory D4' and communication means D5'.

The read-only memory D2' of the device DWT constitutes a storage medium in accordance with the invention, readable by the processor D1' and on which is stored a computer program PGI' in accordance with the invention, this program comprising instructions for executing the steps of a training method in accordance with the invention described previously with reference to FIG. 4 in an embodiment.

The computer program PGI' defines functional modules of the device DWT shown in FIG. 5.

## Claims

1. A computer-implemented method for determining a wear rate (W*) of a tire of a vehicle (VEH) so-called test vehicle based on driving states (DS) of said test vehicle during a time period, wherein the driving states (DS) include at least one of the following types of driving states:

   • longitudinal acceleration (Gx) of the vehicle;
   • lateral acceleration (Gy) of the vehicle;
   • yaw rate (YR) of the vehicle

   said method comprising steps of determining (S10) at least one statistical representation (HIST) of said driving states (DS) over said time period,

   **characterized in that** said method further comprises the following steps:

   • determining (S20) at least one parametrized function ($FP_p$, $FP_n$) representative of said at least one statistical representation (HIST); and
   • determining (S30) said wear rate (W*) with an estimation model (PM) using as input at least one parameter ($A_p$, $B_p$, $A_n$, $B_n$) of the at least one parametrized function ($FP_p$, $FP_n$);

   said estimation model (PM) being determined such as to minimize errors between estimated tire wear rates ($W_i$*) and measured tire wear rates ($W_i$) of at least one reference vehicle ($VEH_i$), said estimated wear rates ($W_i$*) being determined by said estimation model.

2. The method according to claim 1, wherein said at least one statistical representation is a histogram.

3. The method according to claim 2, wherein said step (S10) of determining at least one statistical representation ($HIST_p$, $HIST_n$) comprises, for at least one type (Gx, Gy, YR) of driving states (DS), substeps of:

   • dividing (S101) the driving states belonging to said at least one type of quantity into distinct groups ($Gx_n$, $Gx_p$) of driving states, each group corresponding to a distinct phase of driving;
   • determining (S102), for at least one said group ($Gx_n$, $Gx_p$), statistical representation ($HIST_n$ $HIST_p$) of the driving states of this group ($Gx_n$, $Gx_p$).

4. The method according to any of claims 1 to 3 comprising a step of determining at least one logarithm of said at least one statistical representation, and wherein said at least one parametrized function is determined based on said at least one logarithm.

5. The method according to any of claims 1 to 4, wherein said at least one parametrized function is a polynomial function and said parameters of the parametrized function are polynomial coefficients.

6. The method according to any of claims 1 to 5 comprising a step of obtaining (S0) at least one of said driving states (DS) based on data received from a controller area network (CAN) of said vehicle.

7. A computer-implemented method for training an estimation model (PM) for determining a wear rate of a tire of a vehicle based on driving states (DS) of said vehicle, wherein the driving states (DS) include at least one of the following types of driving states:

- longitudinal acceleration (Gx) of the vehicle;
- lateral acceleration (Gy) of the vehicle;
- yaw rate (YR) of the vehicle,

said method comprising the steps of determining (ST10) statistical representations ($HIST_i$) of driving states ($DS_i$) of at least one reference vehicle ($VEH_i$);

**characterized in that** said method further comprises the following steps:

- determining (ST20) parametrized functions ($FP_n{}^i$, $FP_p{}^i$) representative of said statistical representations ($HIST_i$);
- updating (ST30) said estimation model so as to minimize errors between estimated wear rates ($W_i{}^*$) and measured wear rates ($W_i$) of the at least one reference vehicle ($VEH_i$), said estimated wear rates being determined by said estimation model taking as input parameters of said parametrized functions ($FP_n{}^i$, $FP_p{}^i$).

8. The method according to any of claims 1 to 6, wherein said estimation model is trained according to claim 7.

9. The method according to any of claims 1 to 6 or 8 comprising steps of:

- comparison (S50) between the predicted wear rate (W*) of a tire of said test vehicle (VEH) and at least one wear rate ($<W_i{}^*>$) of at least one other vehicle determined based on driving states of said at least one other vehicle with a method according to any of claims 1 to 6 or 8;
- determining (S60) a class of wear rate (LW) of the tire of said test vehicle (VEH) based on said comparison (S50).

10. The method according to any of claims 1 to 9, wherein said estimation model is a machine learning model.

11. A data processing device (DWP) for determining a wear rate (W*) of a tire of a vehicle (VEH) so-called test vehicle based on driving states (DS) of said test vehicle during a time period, wherein the driving states (DS) include at least one of the following types of driving states:

- longitudinal acceleration (Gx) of the vehicle;
- lateral acceleration (Gy) of the vehicle;
- yaw rate (YR) of the vehicle,

said device (DWP) comprising a module for determining (M10) at least one statistical representation (HIST) of said driving states (DS) over said time period;

**characterized in that** the data processing device further comprises:

- a module for determining (M20) at least one parametrized function ($FP_p$, $FP_n$) representative of said at least one statistical representation (HIST); and
- a module for determining (M30) said wear rate (W*) with an estimation model (PM) taking as input at least one parameter (Ap, Bp, An, Bn) of the at least one parametrized function (FP);

said estimation model (PM) being determined such as to minimize errors between estimated tire wear rates ($W_i{}^*$) and measured tire wear rates ($W_i$) of at least one reference vehicle ($VEH_i$), said estimated wear rates ($W_i{}^*$) being determined by said estimation model.

12. A data processing device (DWT) for training an estimation model (PM) for determining a wear rate of a tire based on driving states (DS) of said vehicle, wherein the driving states (DS) include at least one of the following types of driving states:

- longitudinal acceleration (Gx) of the vehicle;
- lateral acceleration (Gy) of the vehicle;
- yaw rate (YR) of the vehicle,

said device comprising a module for determining (MT10) statistical representations ($HIST_i$) of driving states ($DS_i$) of at least one reference vehicle ($VEH_i$);

**characterized in that** the data processing device further comprises:

- a module for determining (MT20) parametrized functions ($FP_n{}^i$, $FP_p{}^i$) representative of said statistical representations ($HIST_i$);
- a module for updating (MT30) said estimation model so as to minimize errors between estimated wear rates ($W_i{}^*$) and measured wear rates ($W_i$) of the at least one reference vehicle ($VEH_i$), said estimated wear rates being determined by said estimation model taking as input parameters of said parametrized functions ($FP_n{}^i$, $FP_p{}^i$).

13. A vehicle equipped with a data processing device (DWP) according to claim 11.

14. A computer program (PGI, PGI') including instructions for executing a method according to any one of claims 1 to 10 when said program is executed by a computer.

**15.** A recording medium (D2, D2') readable by a computer and having recorded thereon a computer program (PGI, PGI') according to claim 14.

**Patentansprüche**

**1.** Computerimplementiertes Verfahren zum Bestimmen einer Verschleißrate (W*) eines Reifens eines Fahrzeugs (VEH), eines sogenannten Testfahrzeugs, basierend auf Fahrzuständen (DS) des Testfahrzeugs während eines Zeitraums, wobei die Fahrzustände (DS) mindestens eine der folgenden Arten von Fahrzuständen beinhalten:

• Längsbeschleunigung (Gx) des Fahrzeugs;
• Querbeschleunigung (Gy) des Fahrzeugs;
• Giergeschwindigkeit (YR) des Fahrzeugs,
das Verfahren umfassend Schritte eines Bestimmens (S10) mindestens einer statistischen Darstellung (HIST) der Fahrzustände (DS) über den genannten Zeitraum,
**dadurch gekennzeichnet, dass** das Verfahren ferner die folgenden Schritte umfasst:

• Bestimmen (S20) mindestens einer parametrisierten Funktion ($FP_p$, $FP_n$), die repräsentativ für die mindestens eine statistische Darstellung (HIST) ist; und
• Bestimmen (S30) der Verschleißrate (W*) mit einem Schätzmodell (PM) unter Verwendung als Eingabe mindestens eines Parameters ($A_p$, $B_p$, $A_n$, $B_n$) der mindestens einen parametrisierten Funktion ($FP_p$, $FP_n$) verwendet;

wobei das Schätzmodell (PM) bestimmt wird, um die Fehler zwischen geschätzten Reifenabnutzungsraten ($W_i^*$) und den gemessenen Reifenabnutzungsraten ($W_i$) von mindestens einem Referenzfahrzeug ($VEH_i$) minimiert werden, wobei die geschätzten Verschleißraten ($W_i^*$) durch das Schätzmodell bestimmt werden.

**2.** Verfahren nach Anspruch 1, wobei die mindestens eine statistische Darstellung ein Histogramm ist.

**3.** Verfahren nach Anspruch 2, wobei der Schritt (S10) eines Bestimmens mindestens einer statistischen Darstellung ($HIST_p$, $HIST_n$) für mindestens einen Typ (Gx, Gy, YR) von Antriebszuständen (DS) die folgenden Teilschritte umfasst:

• Unterteilung (S101) der Fahrzustände, die zu der mindestens einen Art von Größe gehören, in verschiedene Gruppen ($Gx_n$, $Gx_p$) von Fahrzuständen, wobei jede Gruppe einer bestimmten Fahrphase entspricht;

• Bestimmen (S102) einer statistischen Darstellung ($HTST_n$, $HIST_p$) der Fahrzustände dieser Gruppe ($Gx_n$, $Gx_p$) für mindestens eine dieser Gruppen ($Gx_n$, $Gx_p$).

**4.** Verfahren nach einem der Ansprüche 1 bis 3, umfassend einen Schritt eines Bestimmens mindestens eines Logarithmus der mindestens einen statistischen Darstellung, und wobei die mindestens eine parametrisierte Funktion basierend auf dem mindestens einen Logarithmus bestimmt wird.

**5.** Verfahren nach einem der Ansprüche 1 bis 4, wobei die mindestens eine parametrisierte Funktion eine polynomiale Funktion ist und die Parameter der parametrisierten Funktion polynomiale Koeffizienten sind.

**6.** Verfahren nach einem der Ansprüche 1 bis 5, umfassend einen Schritt eines Erlangens (S0) mindestens eines der Fahrzustände (DS) basierend auf Daten, die von einem Controller Area Network (CAN) des Fahrzeugs empfangen werden.

**7.** Computerimplementiertes Verfahren zum Trainieren eines Schätzmodells (PM) zum Bestimmung der Verschleißrate eines Reifens eines Fahrzeugs basierend auf Fahrzuständen (DS) des Fahrzeugs, wobei die Fahrzustände (DS) mindestens eine der folgenden Arten von Fahrzuständen beinhalten:

• Längsbeschleunigung (Gx) des Fahrzeugs;
• Querbeschleunigung (Gy) des Fahrzeugs;
• Giergeschwindigkeit (YR) des Fahrzeugs,
das Verfahren umfassend die Schritte eines Bestimmens (ST10) statistischer Darstellungen ($HIST_i$) von Fahrzuständen ($DS_i$) mindestens eines Referenzfahrzeugs ($VEH_i$);
**dadurch gekennzeichnet, dass** das Verfahren ferner die folgenden Schritte umfasst:

• Bestimmen (ST20) parametrisierter Funktionen ($FP_n^i$, $FP_p^i$), die repräsentativ für die genannten statistischen Darstellungen ($HIST_i$) sind;
• Aktualisieren (ST30) des Schätzmodells, um Fehler zwischen geschätzten Verschleißraten ($W_i^*$) und gemessenen Verschleißraten ($W_i$) des mindestens einen Referenzfahrzeugs ($VEH_i$) zu minimieren, wobei die geschätzten Verschleißraten durch das Schätzmodell bestimmt werden, das als Eingangsparameter die parametrisierten Funktionen ($FP_n^i$, $FP_p^i$) verwendet.

**8.** Verfahren nach einem der Ansprüche 1 bis 6, wobei das Schätzmodell nach Anspruch 7 trainiert wird.

**EP 4 389 463 B1**

**9.** Verfahren nach einem der Ansprüche 1 bis 6 oder 8 umfassend folgende Schritte:

• Vergleich (S50) zwischen der vorhergesagten Verschleißrate (W*) eines Reifens des Testfahrzeugs (VEH) und mindestens einer Verschleißrate (<$W_i$*>) mindestens eines anderen Fahrzeugs, die basierend auf Fahrzuständen des mindestens einen anderen Fahrzeugs mit einem Verfahren nach einem der Ansprüche 1 bis 6 oder 8 bestimmt wird;
• Bestimmen (S60) einer Klasse von Verschleißrate (LW) des Reifens des Testfahrzeugs (VEH) basierend auf dem Vergleich (S50).

**10.** Verfahren nach einem der Ansprüche 1 bis 9, wobei das Schätzmodell ein maschinelles Lernmodell ist.

**11.** Datenverarbeitungsvorrichtung (DWP) zum Bestimmen einer Verschleißrate (W*) eines Reifens eines Fahrzeugs (VEH), eines sogenannten Testfahrzeugs, basierend auf Fahrzuständen (DS) des Testfahrzeugs, während eines Zeitraums, wobei die Fahrzustände (DS) mindestens eine der folgenden Arten von Fahrzuständen beinhalten:

• Längsbeschleunigung (Gx) des Fahrzeugs;
• Querbeschleunigung (Gy) des Fahrzeugs;
• Giergeschwindigkeit (YR) des Fahrzeugs, die Vorrichtung (DWP) umfassend ein Modul zum Bestimmen (M10) mindestens einer statistischen Darstellung (HIST) der Fahrzustände (DS) während des Zeitraums; **dadurch gekennzeichnet, dass** die Datenverarbeitungsvorrichtung ferner Folgendes umfasst:

• ein Modul zum Bestimmen (M20) mindestens einer parametrisierten Funktion ($FP_p$, $FP_n$), die repräsentativ für die mindestens eine statistische Darstellung (HIST) ist; und
• ein Modul zum Bestimmen (M30) der Verschleißrate (W*) mit einem Schätzmodell (PM), das als Eingang mindestens einen Parameter (Ap, Bp, An, Bn) der mindestens einen parametrisierten Funktion (FP) verwendet;

wobei das Schätzmodell (PM) bestimmt wird, um die Fehler zwischen geschätzten Reifenabnutzungsraten ($W_i$*) und den gemessenen Reifenabnutzungsraten ($W_i$) von mindestens einem Referenzfahrzeug ($VEH_i$) minimiert werden, wobei die geschätzten Verschleißraten ($W_i$*) durch das Schätzmodell bestimmt werden.

**12.** Datenverarbeitungsvorrichtung (DWT) zum Trainieren eines Schätzmodells (PM) zum Bestimmen einer Verschleißrate eines Reifens basierend auf Fahrzuständen (DS) des Fahrzeugs, wobei die Fahrzustände (DS) mindestens eine der folgenden Arten von Fahrzuständen umfassen:

• Längsbeschleunigung (Gx) des Fahrzeugs;
• Querbeschleunigung (Gy) des Fahrzeugs;
• Giergeschwindigkeit (YR) des Fahrzeugs, die Vorrichtung umfassend ein Modul zum Bestimmen (MT10) statistischer Darstellungen ($HIST_i$) von Fahrzuständen ($DS_i$) mindestens eines Referenzfahrzeugs ($VEH_i$); **dadurch gekennzeichnet, dass** die Datenverarbeitungsvorrichtung ferner Folgendes umfasst:

• ein Modul zum Bestimmen (MT20) von parametrisierten Funktionen ($FP_n^i$, $FP_p^i$), die repräsentativ für die genannten statistischen Darstellungen ($HIST_i$) sind;
• ein Modul zum Aktualisieren (MT30) des Schätzmodells, um Fehler zwischen geschätzten Verschleißraten ($W_i$*) und gemessenen Verschleißraten ($W_i$) des mindestens einen Referenzfahrzeugs ($VEH_i$) zu minimieren, wobei die geschätzten Verschleißraten durch das Schätzmodell bestimmt werden, das als Eingangsparameter die parametrisierten Funktionen ($FP_n^i$, $FP_p^i$) verwendet.

**13.** Fahrzeug, ausgestattet mit einer Datenverarbeitungsvorrichtung (DWP) nach Anspruch 11.

**14.** Computerprogramm (PGI, PGI'), das Anweisungen zum Ausführen eines Verfahrens nach einem der Ansprüche 1 bis 10 beinhaltet, wenn das Programm von einem Computer ausgeführt wird.

**15.** Aufzeichnungsmedium (D2, D2'), das von einem Computer lesbar ist und auf dem ein Computerprogramm (PGI, PGI') nach Anspruch 14 aufgezeichnet ist.

**Revendications**

**1.** Procédé mis en œuvre par ordinateur pour déterminer un taux d'usure (W*) d'un pneumatique d'un véhicule (VEH) appelé véhicule d'essai sur la base d'états de conduite (DS) dudit véhicule d'essai au cours d'une période de temps, les états de conduite (DS) comprenant au moins un des types suivants d'états de conduite :

• accélération longitudinale (Gx) du véhicule ;
• accélération latérale (Gy) du véhicule ;
• taux de lacet (YR) du véhicule,

ledit procédé comprenant des étapes de détermination (S10) de au moins une représentation statistique (HIST) desdits états de conduite (DS) sur ladite période de temps, **caractérisé en ce que** ledit procédé comprend en outre les étapes suivantes :

> • détermination (S20) de au moins une fonction paramétrée (FPp, FPn) représentative de ladite au moins une représentation statistique (HIST) ; et
> • détermination (S30) dudit taux d'usure (W*) avec un modèle d'estimation (PM) utilisant comme entrée au moins un paramètre (Ap, Bp, An, Bn) de la au moins une fonction paramétrée (FPp, FPn) ;

ledit modèle d'estimation (PM) étant déterminé de façon à minimiser des erreurs entre des taux d'usure de pneumatique estimés ($W_i^*$) et des taux d'usure de pneumatique mesurés ($W_i$) de au moins un véhicule de référence ($VEH_i$), lesdits taux d'usure estimés ($W_i^*$) étant déterminés par ledit modèle d'estimation.

2. Procédé selon la revendication 1, selon lequel ladite au moins une représentation statistique est un histogramme.

3. Procédé selon la revendication 2, selon lequel ladite étape (S10) de détermination de au moins une représentation statistique ($HIST_p$, $HIST_n$) comprend, pour au moins un type (Gx, Gy, YR) des états de conduite (DS), des sous-étapes de :

> • division (S101) des états de conduite appartenant audit au moins un type de quantité en groupes distincts ($Gx_n$, $Gx_p$) d'états de conduite, chaque groupe correspondant à une phase distincte de la conduite ;
> • détermination (S102), pour au moins un dudit groupe ($Gx_n$, $Gx_p$), d'une représentation statistique ($HIST_n$, $HIST_p$) des états de conduite de ce groupe ($Gx_n$, $Gx_p$).

4. Procédé selon l'une quelconque des revendications 1 à 3 comprenant une étape de détermination de au moins un logarithme de ladite au moins une représentation statistique, et selon lequel ladite au moins une fonction paramétrée est déterminée sur la base dudit au moins un logarithme.

5. Procédé selon l'une quelconque des revendications 1 à 4, selon lequel ladite au moins une fonction paramétrée est une fonction polynômiale et lesdits paramètres de la fonction paramétrée sont des coefficients polynômiaux.

6. Procédé selon l'une quelconque des revendications 1 à 5 comprenant une étape d'obtention (S0) de au moins un desdits états de conduite (DS) sur la base de données reçues depuis un réseau local de commande (CAN) dudit véhicule.

7. Procédé mis en œuvre par ordinateur destiné à entraîner un modèle d'estimation (PM) pour déterminer un taux d'usure d'un pneumatique d'un véhicule sur la base d'états de conduite (DS) dudit véhicule, les états de conduite (DS) comprenant au moins un des types suivants d'états de conduite :

> • accélération longitudinale (Gx) du véhicule ;
> • accélération latérale (Gy) du véhicule ;
> • taux de lacet (YR) du véhicule,
> ledit procédé comprenant les étapes de détermination (ST10) de représentations statistiques ($HIST_i$) d'états de conduite ($DS_i$) de au moins un véhicule de référence ($VEH_i$) ;
> **caractérisé en ce que** ledit procédé comprend en outre les étapes suivantes :

> • détermination (ST20) de fonctions paramétrées ($FP_n^i$, $FP_p^i$) représentatives desdites représentations statistiques ($HIST_i$) ;
> • mise à jour (ST30) dudit modèle d'estimation (PM) de façon à minimiser des erreurs entre des taux d'usure estimés ($W_i^*$) et des taux d'usure mesurés ($W_i$) du au moins un véhicule de référence ($VEH_i$), lesdits taux d'usure estimés étant déterminés par ledit modèle d'estimation en prenant comme paramètres d'entrée lesdites fonctions paramétrées ($FP_n^i$, $FP_p^i$) .

8. Procédé selon l'une quelconques des revendications 1 à 6, selon lequel ledit modèle d'estimation est entraîné selon la revendication 7.

9. Procédé selon l'une quelconques des revendications 1 à 6 ou 8 comprenant les étapes de :

> • comparaison (S50) entre le taux d'usure prédit (W*) d'un pneumatique dudit véhicule d'essai (VEH) et au moins un taux d'usure ($<W_i^*>$) d'au moins un autre véhicule déterminé sur la base des états de conduite dudit au moins un autre véhicule avec un procédé selon l'une quelconque des revendications 1 à 6 ou 8 ;
> • détermination (S60) d'une classe de taux d'usure (LW) du pneumatique dudit véhicule d'essai (VEH) sur la base de ladite comparaison (S50).

10. Procédé selon l'une quelconques des revendications 1 à 9, selon lequel ledit modèle d'estimation est un modèle d'apprentissage automatique.

**11.** Dispositif de traitement de données (DWP) destiné à déterminer un taux d'usure (W*) d'un pneumatique d'un véhicule (VEH) appelé véhicule d'essai sur la base d'états de conduite (DS) dudit véhicule d'essai au cours d'une période de temps, les états de conduite (DS) comprenant au moins un des types suivants d'états de conduite :

> • accélération longitudinale (Gx) du véhicule ;
> • accélération latérale (Gy) du véhicule ;
> • taux de lacet (YR) du véhicule,
> ledit dispositif (DWP) comprenant un module de détermination (M10) de au moins une représentation statistique (HIST) desdits états de conduite (DS) sur ladite période de temps, **caractérisé en ce que** le dispositif de traitement de données comprend en outre :

>> • un module de détermination (M20) de au moins une fonction paramétrée ($FP_p$, $FP_n$) représentative de ladite au moins une représentation statistique (HIST) ; et
>> • un module de détermination (M30) dudit taux d'usure (W*) avec un modèle d'estimation (PM) prenant comme entrée au moins un paramètre (Ap, Bp, An, Bn) de la au moins une fonction paramétrée (FP) ;

>> ledit modèle d'estimation (PM) étant déterminé de façon à minimiser des erreurs entre des taux d'usure de pneumatique estimés ($W_i$*) et des taux d'usure de pneumatique mesurés ($W_i$) de au moins un véhicule de référence ($VEH_i$), lesdits taux d'usure estimés ($W_i$*) étant déterminés par ledit modèle d'estimation.

**12.** Dispositif de traitement de données (DWT) destiné à entraîner un modèle d'estimation (PM) pour déterminer un taux d'usure d'un pneumatique sur la base d'états de conduite (DS) dudit véhicule, les états de conduite (DS) comprenant au moins un des types suivants d'états de conduite :

> • accélération longitudinale (Gx) du véhicule ;
> • accélération latérale (Gy) du véhicule ;
> • taux de lacet (YR) du véhicule,
> ledit dispositif comprenant un module de détermination (MT10) de représentations statistiques ($HIST_i$) d'états de conduite ($DS_i$) de au moins un véhicule de référence ($VEH_i$) ;
> **caractérisé en ce que** le dispositif de traitement de données comprend en outre :

>> • un module de détermination (MT20) de fonctions paramétrées ($FP_n^i$, $FP_p^i$) représentatives desdites représentations statistiques ($HIST_i$) ;
>> • un module de mise à jour (ST30) dudit modèle d'estimation de façon à minimiser des erreurs entre des taux d'usure estimés ($W_i$*) et des taux d'usure mesurés ($W_i$) du au moins un véhicule de référence ($VEH_i$), lesdits taux d'usure estimés étant déterminés par ledit modèle d'estimation en prenant comme paramètres d'entrée lesdites fonctions paramétrées ($FP_n^i$, $FP_p^i$).

**13.** Véhicule équipé d'un dispositif de traitement de données (DWP) selon la revendication 11.

**14.** Programme informatique (PGI, PGI') comprenant des instructions pour exécuter un procédé selon l'une quelconque des revendications 1 à 10 quand ledit programme est exécuté par un ordinateur.

**15.** Support d'enregistrement (D2, D2') lisible par un ordinateur et ayant enregistré dessus un programme informatique (PGI, PGI') selon la revendication 14.

S0    S10    S20    S30

Process data

| CAN data VEH | DS : Gx Gy YR | Process data |
|---|---|---|

S101

S101

HIST$_p$
HIST$_n$

fitting

A$_p$
B$_p$
A$_n$
B$_n$

PM → W*

# FIG. 1

VEH

DWP

| CAN | | M0 | | M10 |
|---|---|---|---|---|

| M30 | | M20 |
|---|---|---|

# FIG. 2

S0    S10    S20    S30    S50    S60

| CAN data VEH | Process data | fitting FP$_p$ FP$_n$ | PM | Comparaison W*, <W$_i$*> | Wear Level |
|---|---|---|---|---|---|

HIST$_p$
HIST$_n$

A$_p$
B$_p$
A$_n$
B$_n$

W*

→ LW

# FIG. 3

ST0      ST10      ST20      ST25      ST30

CAN data VEH$_i$ W$_i$ → DS$_i$ → Process data → HIST$_p^i$ HIST$_n^i$ → fitting FP$_p^i$ FP$_n^i$ → $A_p^i$ $B_p^i$ $A_n^i$ $B_n^i$ → Store W$_i$, $A_p^i$, $B_p^i$, $A_n^i$, $B_n^i$ → Update PM

## FIG. 4

VEH$_1$ , VEH$_2$ , VEH$_N$ → SVR → DWT

MT0 — MT10 — MT20 — MT25 — MT30

## FIG. 5

**FIG. 6A**

**FIG. 6B**

$$F_n(x) = A_n x^2 + B_n \qquad F_p(x) = A_p x^2 + B_p$$

**FIG. 7**

**FIG. 8**

**FIG. 9**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022017090 A1